# EUROPEAN PATENT SPECIFICATION

(11) **EP 0 673 996 B1**
(45) Date of publication and mention of the grant of the patent: **16.04.2003**
(21) Application number: 95110316.7
(22) Date of filing: 25.10.1990
(51) Int. Cl.: C11D 3/16, C11D 3/37, B01D 12/00

(54) **Cleaning compositions**
Reinigungsmittelzusammensetzungen
Compositions nettoyantes

(30) Priority: 26.10.1989 JP 28086089; 21.11.1989 JP 30258089; 16.03.1990 JP 6584190; 16.03.1990 JP 6584290
(43) Date of publication of application: 27.09.1995
(62) Divisional of application: 90915830.5
(73) Proprietor: Toshiba Silicone Company Limited, Tokyo (JP)
(72) Inventor: Inada, Minoru, c/o Intellectual Property Div., Tokyo (JP); Kabuki, Kimiaki, c/o Intellectual Property Div., Tokyo (JP); Imajo, Yasutaka, c/o Intellectual Property Div., Tokyo (JP); Oguni, Takayuki, c/o Intellectual Property Div., Tokyo (JP); Yagi, Noriaki, c/o Intellectual Property Div., Tokyo (JP); Saitoh, Nobuhiro, c/o Intellectual Property Div., Tokyo (JP); Kurita, Akitsugu, c/o Intellectual Property Div., Tokyo (JP); Takezawa, Yoshiaki, c/o Intellectual Property Div., Tokyo (JP)
(74) Representative: Waldren, Robin Michael

(56) References cited:
- EP-A- 0 182 583
- DE-A- 3 739 711
- US-A- 3 511 708
- US-A- 4 501 682
- DATABASE WPI Section Ch, Week 8630 Derwent Publications Ltd., London, GB; Class B05, AN 86-194757 XP002026012 & JP 61 129 186 A (LION CORP) , 17 June 1986
- DATABASE WPI Section Ch, Week 7944 Derwent Publications Ltd., London, GB; Class A97, AN 79-80148B XP002026013 & JP 54 124 010 A (NITTO CHEM IND KK) , 26 September 1979

## Description

This invention relates to cleaning compositions which will replace cleaning agents containing an organic solvent including flon and the like, and their use.

In manufacturing various parts such as metal parts, plated and coated parts, and electronic and semiconductor parts, flon containing solvents such as flon 113, and organic solvents such as trichloroethane, trichlorethylene, tetrachloroethylene, and carbon tetrachloride are widely used as cleaning agents for eliminating oil stains and the like.

The above organic solvent containing cleaning agents are also used as dewatering cleaning agents after having washed various parts with water in order to avoid the following problems that are associated with direct drying of water present on an object to be cleaned:
(1) Heating (100°C or more) which entails energy loss;
(2) Reduction in productivity due to the time taken in drying;
(3) Likely deformation of the object to be cleaned due to heating (thermal expansion that exceeds tolerances); and
(4) Increase in the space for installing the cleaning system, which includes a cooler and a heat shielding unit.

The term "dewatering cleaning agent" is used herein to denote a cleaning agent into which an object to be cleaned, which has been washed with water, is immersed or with which the object is rinsed by shower, such that water present on the object is substituted by the cleaning agent and then vaporised by air at room temperature, or heated to 60°C or less so that the object can be dried.

However, ever since it has been found that the destruction of the ozone layer by discharge of flon agents can seriously affect the human body and the ecological system, the use of flons such as flons 12 and flon 113, whose ozone destruction coefficients are high is, on the gradual decline on a global scale towards an eventual total ban.

Stricter regulations are imposed also on chlorine-containing organic solvents such as trichloroethylene and tetrachloroethylene which are presumed to induce soil- and underwater-contaminations and the like.

Flons whose ozone destruction coefficients are lower than the currently used flon containing solvents are being developed, some of which are being produced on a commercial basis. However, these new agents are not so welcome because they are still destroyers of the ozone layer.

As a replacement for the above organic solvents, surfactant-based water system cleaning agents which are free from environmental destruction and contamination are gradually attracting attention. However, cleaning agents containing only surfactants are not satisfactory in their penetrability, thereby not cleaning, e.g., stains which have penetrated into restricted regions and also medium to high viscous, persistently sticky oil stains.

Japanese Patent Publication No. 50463/1988 discloses a method of cleaning woven materials by using silicone containing compounds. According to the disclosure, a liquid cleaning composition containing an effective amount of cyclic siloxane having 4 to 6 silicon atoms is used. However, the method differs from the industrial cleaning process.

DE-A-3,739,911 describes using polydialkylsiloxane as a composition for cleaning textiles. Similarly EP-A-0,182,583 describes the use of cyclosiloxane to clean textiles. Non-aqueous compositions containing polyorganosiloxanes have been proposed for purposes of surface coating, e.g. in US-A-4 501 682. The coating process directs to keep some materials on the surface of objects.

The use of lower alcohols such as isopropyl alcohol has also been under study for a new development that can replace the above-mentioned organic solvents for dewatering. However, isopropyl alcohol has a flash point of 11.7°C, which is lower than room temperature, and this involves some danger of fire under ordinary handling conditions. In addition, isopropyl alcohol is highly compatible with water, so that an initial dewatering performance is ensured, but the dewatering performance of isopropyl alcohol containing much water resulting from its repetitive use deteriorates because isopropyl alcohol acts as water rather than as alcohols. As a result, the water remains on the surface of the object. As a result, its eventual dewatering property is impaired. To refine isopropyl alcohol for reuse by removing water from the used isopropyl alcohol, a tremendous equipment investment is required. Also, isopropyl alcohol is toxic to the human body which is another factor that tends to mitigate against its use.

The use of hydrocarbon and higher alcohols which have higher flash points than room temperature allows a comparatively easy removal of water, but their low volatility prevents them from being dried at low temperatures, e.g. 60°C or less, thereby making them unsuitable for application as dewatering cleaning agents.

Thus, an object of the invention is to provide dewatering compositions which have the substituting and drying properties equivalent to those of organic solvent containing dewatering cleaning agents, which have less risk of fire and which are not so deleterious to the environment. The dewatering compositions of the present invention are, of course, non-aqueous compositions.

Our European Patent Application No. 90915830.5, from which this application is divided, describes and claims dewatering non-aqueous cleaning agent compositions which comprise at least one low molecular weight polyorganosiloxane of formula (I):- 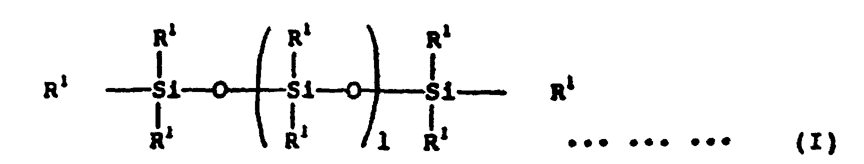 (wherein R¹ is an organic group of single valency, substituted by the same or different groups or is unsubstituted, and 1 is an integer from 0 to 5).

The present invention now provides use of a non-aqueous dewatering cleaning composition as a dewatering cleaning agent for at least one of metal parts, plated parts, electronic parts, semiconductor parts, plastic parts and ceramic part, comprising at least one low molecular weight polyorganosiloxane of formula (II): 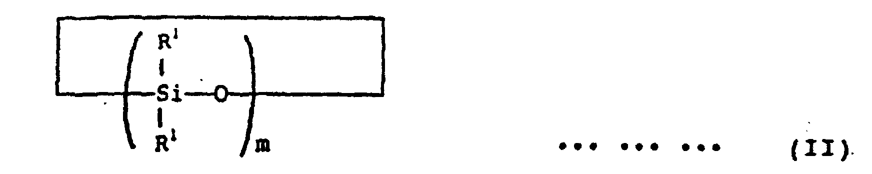 (wherein R¹ is an organic group of single valence substituted by the same or different group or unsubstituted, and m is an integer from 3 to 7).

Each of such low molecular weight polyorganosiloxanes exhibits powerful penetrability to stains and satisfactory substituting property with water alone. R¹ in formula (II) denotes a substituted or unsubstituted organic group of single valency including: a single-valence unsubstituted hydrocarbon group such as an alkyl group, e.g. a methyl group, an ethyl group, a propyl group, and a butyl group or a phenyl group; or a single-valence substituted hydrocarbon group such as a trifluoromethyl group. Suitable terminal R¹ groups include an amino group, an amide group an acrylic acid ester group, and a mercaptan group. However, methyl group is most preferable from the viewpoint of stability, and volatility, etc.

The term "dewatering agent" has already been defined. It is used because "water", is a typical liquid capable of being substituted by the low molecular weight polyorganosiloxanes. However, for the avoidance of doubt, it should also be understood that the cleaning compositions of the invention may also be used as "liquid removing" agents in substituting and cleaning liquids other than water. Relevant liquids which may thus be removed include those which are insoluble or difficult to be dissolved in the low molecular weight polyorganosiloxanes and whose surface tension is larger than that of the low molecular weight polyorganosiloxanes. The "water" to be removed includes those liquids which have water as dispersion medium, such as mixtures of water and alcohols and liquids in which various substances are dissolved.

The low molecular weight polyorganosiloxane represented by formula (I) can be, as describe previously, substitute for water alone, thus allowing itself to be easily vaporised and dried by hot air below 60°C.

The dewatering compositions of the invention may consist only of or substantially of, the low molecular weight polyorganosiloxane and with it a satisfactory effect can be obtained. However, its cleaning and dewatering properties and the like will be further improved by forming it into a composition having the low molecular weight polyorganosiloxane mixed with a surfactant and/or a hydrophilic solvent.

Surfactants contribute to improving particularly the cleaning and dewatering properties of the composition. Suitable surfactants for this purpose include: anionic surfactants such as polyoxyalkylene alkylether sulfonates and phosphoric esters; nonionic surfactants such as polyalcohol fatty acid esters, polyoxyalkylene fatty acid esters, and polyoxyalkylene alkylethers; amphoteric surfactants such as imidazoline derivatives; and cationic surfactants such as alkylamine salts and alkyl quaternary ammonium salts. In addition thereto, terpene-containing compounds which are rarely present in the form of a single substance and extracted from natural substances, as well as higher fatty acid esters may also be used. It is also possible to use synthetic compounds in which part of the chemical structure of each compound is substituted by a fluorine or silicon atom. However, it is more preferable to use nonionic surfactants for enhancing the dewatering/cleaning agent performance.

While the amount ratio of surfactant (if present) is not particularly limited, it is desirable to have 20 parts by weight or less, or, more preferably, 3 parts by weight or less, of the surfactant, relative to 100 parts by weight of low molecular weight polyorganosiloxane.

If present, a suitable hydrophilic solvent for inclusion in compositions according to the present invention may be one compatible with the low molecular weight polyorganosiloxanes, and more particularly from the practical viewpoint, one whose flash point is 40°C or more. The hydrophilic solvent contributes to improving substituting property by water.

Suitable hydrophilic solvents for this purpose include: polyalcohols and their derivatives, e.g. ethylene glycol monomethyl ethers, ethylene glycol monoethyl ethers, ethylene glycol monopropyl ethers, ethylene glycol monobutyl ethers, ethylene glycol monobutyl ether acetates and diethylene glycol monobutyl ethers. Particularly preferred are diethylene glycol monobutyl ethers, because of its compatibility with the low molecular weight polyorganosiloxanes and human safety, etc. Since these compounds exhibit improved properties when coexisting with the low molecular weight polyorganosiloxanes, a composition only using this combination is advantageous for substitution for water, as well as drying.

While the amount of the hydrophilic solvent is not particularly limited, it is preferable to have 100 parts by weight or less or, more preferably, 50 parts by weight or less of the hydrophilic solvent relative to 100 parts by weight of the low molecular weight polyorganosiloxane.

The dewatering cleaning agents of the invention may be applied to metals, ceramics, plastics, and the like. More specifically, they may be applied to metallic parts, surface treated parts, electronic and semiconductor parts, electric and precision machinery parts, optical parts, glass and ceramic parts, and the like. An exemplary general-purpose cleaning process usually involves immersing of any of the above-described parts in, or spraying them with dewatering cleaning agent of the invention to substitute for any water present on the part and drying it by blowing hot air or the like. The immersion and spraying processes may be accompanied by ultrasonic agitation and mechanical stirring.

The dewatering cleaning agents of the invention, exhibit a powerful dewatering performance and can not only provide cleaning and water-substituting effects equivalent to those of conventional cleaning agents containing flon and the like but also allow various materials to be stably cleaned with low erosion. In addition, as preferred agents of formula (I) contain no element halogen such as chlorine and bromine, they have little risk of destroying or polluting the environment Thus, in this application, the dewatering cleaning agents of the invention represent a viable replacement for conventional organic solvents containing agents such as flon, which have posed environmental problems.

The present invention will now be explained in more detail by reference to the following Examples and with reference to the accompanying drawing, in which:-
Figure 1 is a diagram showing an exemplary construction of a cleaning system using a dewatering cleaning agent of the invention.

### Examples 1 to 7

Octamethyltrisiloxane (E1), octamethyltetrasiloxane (E2), and decamethylpentasiloxane (E3) were prepared as a low molecular weight polyorganosiloxanes and polyoxyethylene oleylether (F1) (P.O.E = 6 moles) and polyoxyethylene octyl ether (F2) (P.O.E. = 10 moles) as surfactants. E2 and E3 are compounds of formula (II).

Diethylene glycol monobutyl ether (CI) was prepared as a hydrophilic solvent. These components were selected and blended so that for each nonaqueous dewatering composition of the present invention shown in Table 1, the components were as listed for Examples 1-7.

### Comparative Examples A to E

Flon 113, methylene chloride, isopropyl alcohol, and ethanol were prepared as conventional dewatering cleaning agents to obtain 5 types of dewatering cleaning agents whose composition ratios were as also shown in Table 1.

The properties of Examples 1 to 7 and Comparative Examples A to E were evaluated by the following methods. The result is also shown in Table 1.

### (1) Dewatering property

Various pieces (a stainless steel strip, a ceramic piece, a polycarbonate piece, a Ni-plated steel strip) were immersed in each dewatering cleaning agent after being washed with water. In Examples 1 to 7, the piece was then rinsed by the low molecular weight polyorganosiloxane blended to prepare the dewatering cleaning agent Thereafter, the piece was dried in an oven at 50 °C. The water marks (stains produced by impurities dissolved in water) after drying the piece were assessed visibly and with a scanning electron microscope (SEM) and evaluated in accordance with the following criteria.
XX: Not evaluable due to erosion of the piece during dewatering.
X: Water marks were visible.
o: No water marks were visible.
o : No water marks whose size is 50 µm or more were observed by SEM.

### (2) Continuous dewatering property

A continuous dewatering test with a frequency of 50 times was conducted using a stainless steel strip and the appearance of the strip was evaluated in a manner analogous to that in test (1) above.

### (3) Drying property

The stainless steel strip was immersed in each dewatering cleaning agent and dried in the oven at 50°C. During the drying process, the strip was touched with a finger to test the drying condition every 5 minutes and the time required for drying was recorded on a 5-minute basis.

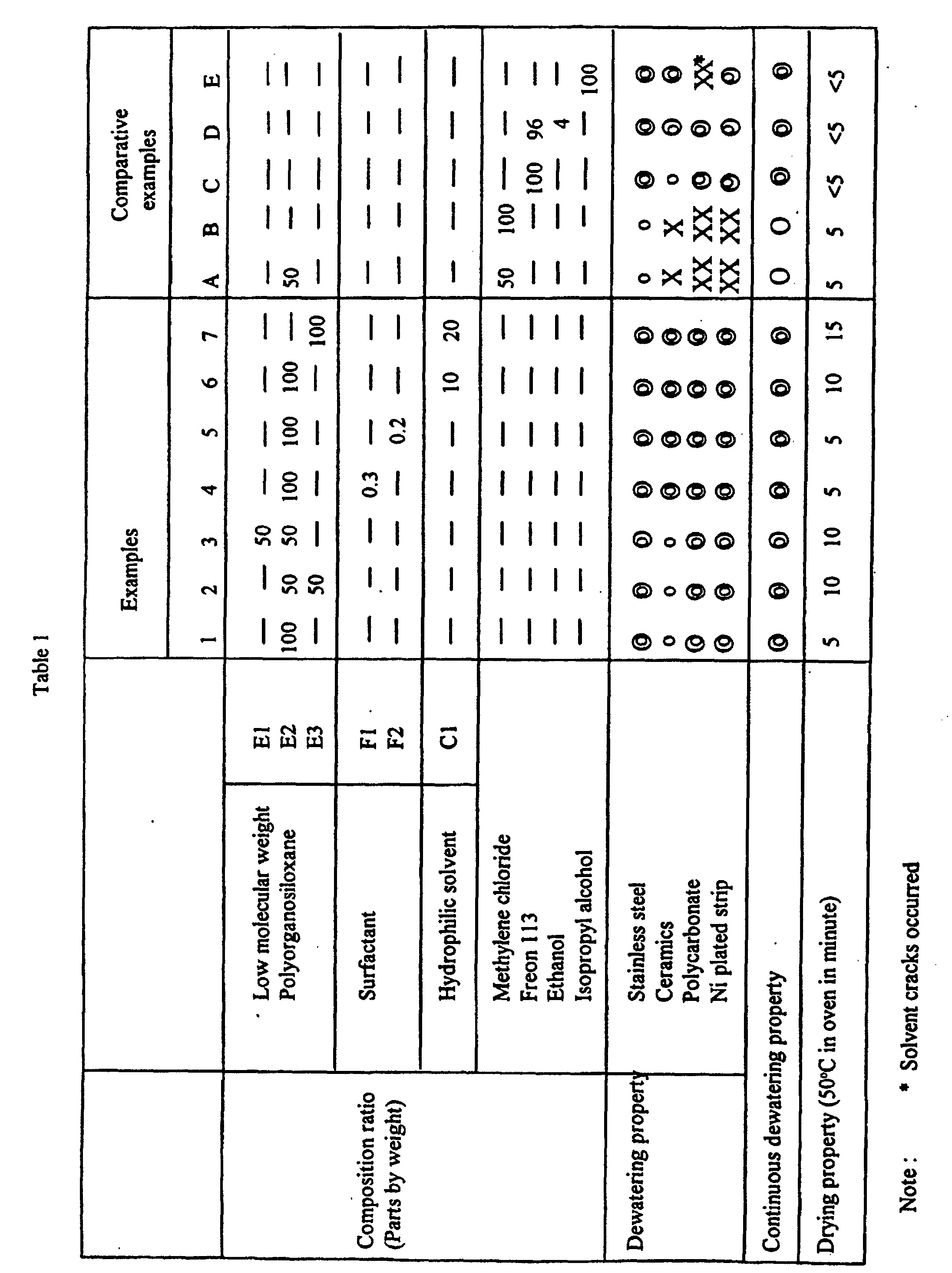

As is apparent from the result shown in Table 1, the dewatering cleaning agents used in accordance with the present invention exhibit satisfactory dewatering performance and are viable substitutes for cleaning agents which contain flon-based organic solvents and the like.

Dewatering cleaning agents containing methylene chloride or isopropyl alcohol (Comparative Examples A and B) rust and erode metal films and plastics. However, the dewatering cleaning compositions of the invention are compatible with metal films and plastics and exhibit satisfactory dewatering properties even for ceramics which have significant surface roughness. Thus, these compositions are reliable when applied to parts including metal, plated, electronic, semiconductor, plastic, and ceramic parts. The dewatering cleaning agent containing isopropyl alcohol causes water to be dissolved therein, thereby causing water to present on the part at the end of the process.

Moreover, inclusion of the surfactants and hydrophilic solvents with the dewatering cleaning agents, as used in Example 1 to 3 improved the dewatering performance.

An exemplary cleaning system using a non-aqueous dewatering cleaning composition of the invention will now be described with reference to Figure 1.

The cleaning system shown in Figure 1 comprises of a cleaning/water-substituting process A and a rinsing/dewatering process B.

The cleaning/water-substituting process A, which is the first process, involves a first cleaning vessel 1 and a second cleaning vessel 2, each serving both as a separator through sedimentation and a separator through overflow, and a drainage vessel 3. The first and second cleaning vessels 1 and 2 communicate with each other through a drain line 2a and an overflow line 2b. The first and second cleaning vessels 1 and 2 are operated with ultrasonic, oscillating, mechanical stirring, heating, and brushing processes and the like.

The first and second cleaning vessels 1 and 2 respectively contain a cleaning agent D1 composed of a low molecular weight polyorganosiloxane and a surfactant, as a composition according to the present invention. The surfactant containing cleaning agent D1 may be prepared such that its specific gravity is less than that of water and larger than that of an oily stain. Therefore, water Y introduced by an object to be cleaned X is separated-off by being sedimentated at the bottom of the surfactant containing cleaning agent D1 that has been charged in the first and second cleaning vessels 1 and 2. If an oily stain Z is present on the object X, the oil stain Z is separated-off by upwards floatation in the surfactant containing cleaning agent D1 in the first and second cleaning vessels 1 and 2.

The water Y separated-off by being sedimentated in the second cleaning vessel 2 is intermittently discharged to the first cleaning vessel 1 through a drain line 2a while the water Y separated by being sedimentated in the first cleaning vessel 1 is intermittently discharged to a cleaning agent recycling mechanism C (described later) through a drain line 4. A drain line 3a connected to the drainage vessel 3 is also connected to the cleaning agent recycling mechanism C.

The oily stain Z separated-off by floating in the first and second vessels 1 and 2 is discharged outside while continuously overflown through an overflow line 5 connected to the first cleaning vessel. 1

The surfactant containing cleaning agent D1 charged in the first and second cleaning vessels 1 and 2 is continuously circulated through a filter 6 that serves to remove solid particles, H₂O droplets, undissolved substances, and the like contained in the cleaning agent D1.

The rinsing/dewatering process B, which is the second process, involves a third cleaning vessel 7 and a shower rinse vessel 8. Below the shower rinse vessel 8 is a buffer tank 9 that communicates with the third cleaning vessel 7 through a drain line 9a and an overflow line 9b. The third cleaning vessel 7 is also operated together with ultrasonic, oscillating, mechanical stirring, cleaning agent heating, and brushing processes and the like, if necessary.

The third cleaning vessel 7 contains a cleaning agent D2 consisting only of a silicone composition identical to the low molecular weight polyorganosiloxane used in the first process A. The cleaning agent D2 may be so prepared that its specific gravity is smaller than that of water and larger than that of an oil stain. Therefore, as in the first process A, water Y is separated-off by being sedimentated at the bottom of the cleaning agent D2 and the oily stain Z is separated by upwards floatation in the cleaning agent D2.

The water Y separated by being sedimentated in the third cleaning vessel 7 is intermittently discharged to the cleaning agent recycling mechanism C through a drain line 10 while the oily stain Z separated-off by floating in the third cleaning vessel 7 is discharge outside through an overflow line 11.

The cleaning agent D2 charged in the third cleaning vessel 7 is continuously circulated through a filter 12 that serves to remove solid particles, H₂O droplets, undissolved substances, and the like contained in the cleaning agent D2.

The object to be cleaned X undergoes the first process A and then the second process B to be cleaned and dewatered, and is then dried by a fan forced drier (not shown) to complete the cleaning process.

The cleaning agent used in the cleaning system is subjected to the following recycling process.

As described above, the drain lines 4, 3a, 10 of the first, second and third cleaning vessels 1, 2 and 7, and the drainage vessel 3 are connected to the cleaning agent recycling mechanism C. The cleaning agent D1 or D2 contained in each cleaning vessel is constantly cleaned by the filters 6 and 12. However, when heavily contaminated, the cleaning agent is introduced to the cleaning agent recycling mechanism C through drain lines 4 and 10 by a conveyer pump 13 for fractional distillation. The cleaning agent D1 deposited in the dewatering vessel 3 is also supplied intermittently to the cleaning agent recycling mechanism C.

At the cleaning agent recycling mechanism C, the introduced cleaning agent is separated into liquid components and solid components by a filter 14, and only the liquid components are forwarded to a distiller 15 with the solid components being destroyed. The distiller 15 separates various components, water, oily stains in the cleaning agent utilising the difference in their boiling points. Water and the like that remain in the distiller 15 are further separated by a decanter 16.

Since the cleaning agent D1 is a composition having a surfactant added to the composition D2 (that contains only the low molecular weight polyorganosiloxane) the low molecular weight polyorganosiloxane, i.e., the cleaning agent D2, can be extracted from both cleaning agents D1 and D2, thereby allowing the cleaning agent D2 to be recycled. The components other than the recycled cleaning agent D2, i.e., the surfactant, water, and the like will be destroyed.

The recycled cleaning agent D2 is forwarded to a mixer 18 from which the cleaning agent D1 is supplied, to the shower rinse vessel 8, the third cleaning vessel 7, or the second cleaning vessel 2 through a line 17.

In the shower rinse vessel 8, a shower rinsing process is conducted using only the recycled cleaning agent D2 or a cleaning agent D2 newly introduced through a cleaning agent supply line 19, both being free from impurities.

The mixer 18 mixes the recycled or new cleaning agent D2 with the surfactant newly supplied from a surfactant supply line 20 to prepare a new cleaning agent D1. The new cleaning agent D1 is supplied to the second cleaning vessel 2, if necessary.

With the cleaning system of such construction as described above, the dewatering cleaning agents of the invention can be used efficiently and effectively enjoying the advantage of excellent cleaning properties.

As described in the foregoing pages, the non-aqueous dewatering cleaning compositions of the invention provide powerful dewatering performance without risk of environmental destruction or pollution. Thus, they are a viable replacement for those conventional organic solvent based dewatering cleaning agents which include flon and the like, which have the aformentioned environmental disadvantages.

## Claims

1. Use of a non-aqueous dewatering cleaning composition as a dewatering cleaning agent for at least one of metal parts, plated parts, electronic parts, semiconductor parts, plastic parts and ceramic part, comprising at least one low molecular weight polyorganosiloxane of formula (II): 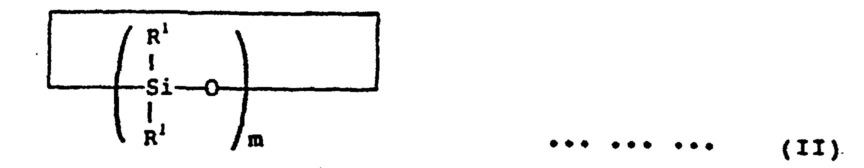 (wherein R¹ is an organic group of single valence substituted by the same or different group or unsubstituted, and m is an integer from 3 to 7).

2. Use of a non-aqueous cleaning composition according to claim 1, consisting essentially of said low molecular weight polyorganosiloxane of formula (II).

3. Use of a non-aqueous cleaning composition according to claim 2, further comprising a surfactant and/or a hydrophilic solvent.

4. Use of a non-aqueous cleaning composition according to claim 3, comprising at least said surfactant, the surfactant being selected from anionic surfactants, nonionic surfactants, amphoteric surfactants, and cationic surfactants.

5. Use of a non-aqueous cleaning composition according to claim 4, wherein the surfactant is an anionic surfactant selected from polyoxyalkylene alkylether sulphonates and phosphoric esters.

6. Use of a non-aqueous cleaning composition according to claim 4, wherein the surfactant is a nonionic surfactant selected from polyalcohol fatty acid esters, polyoxyalkylene fatty acid esters and polyoxyalkylene alkylethers.

7. Use of a non-aqueous composition according to claim 4, wherein the surfactant is an imidazoline derivative amphoteric surfactant.

8. Use of a non-aqueous cleaning composition according to claim 4, wherein the surfactant is a cationic surfactant selected from alkylamine salts and alkyl quaternary ammonium salts.

9. Use of a non-aqueous cleaning composition according to claim 4, wherein the surfactant further includes one of a terpene-containing compound and a higher fatty acid ester.

10. Use of a non-aqueous cleaning composition according to any of claims 4-9,
wherein the amount of the surfactant is 20 parts by weight or less relative to 100 parts by weight of the polyorganosiloxane of formula (II).

11. Use of a non-aqueous cleaning composition according to any of claims 4-9, wherein the amount of the surfactant is 3 parts by weight or less relative to 100 parts by weight of the polyorganosiloxane of formula (II).

12. A non-aqueous dewatering cleaning composition comprising at least one low molecular weight polyorganosiloxane of formula (II): 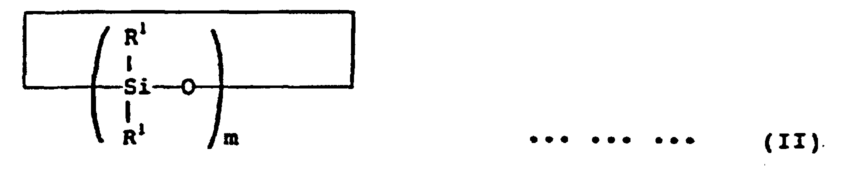 (wherein R¹ is an organic group of single valence substituted by the same or different group or unsubstituted, and m is an integer from 3 to 7), comprising hydrophilic solvent selected from polyalcohols and their derivatives.

13. A non-aqueous dewatering cleaning composition according to claim 12, wherein said hydrophilic solvent has a flash point of 40°C or more.

14. A non-aqueous dewatering cleaning composition according to claim 12 or 13, wherein the hydrophilic solvent is selected from polyalcohols and their derivatives selected from ethylene glycol monomethyl ethers, ethylene glycol monoethyl ethers, ethylene glycol monopropyl ethers, ethylene glycol monobutyl ethers, ethylene glycol monobutyl ether acetates and diethylene glycol monobutyl ethers.

15. A non-aqueous dewatering cleaning composition according to claim 12, 13 or claim 14, wherein the amount of the hydrophilic solvent is 100 parts by weight or less relative to 100 parts by weight of the polyorganosiloxane of formula (II).

16. A non-aqueous dewatering cleaning composition according to any of claims 12-15, wherein the amount of the hydrophilic solvent is 50 parts by weight or less relative to 100 parts by weight of the polyorganosiloxane of formula (II).

17. A method of cleaning an object, the method comprising treating the object using a non-aqueous cleaning composition according to any one of claims 12-16.

18. A method according to claim 17, wherein the object to be cleaned comprises at least one material selected from a metal material, a ceramic material and a plastics material.

19. A method of cleaning an object, the method comprising the use of a non-aqueous dewatering cleaning composition, according to any one of claims 1-16, wherein the object to be cleaned comprises at least one material selected from a metal material, a ceramic material and a plastics material, and the material is in the form of at least one part selected from a metallic part, a surface-treated part, an electronic part, an electrical part, a semiconductor part, a precision machinery part, an optical part, a glass part, a ceramic part and a plastic part.

20. A method according to any of claims 17-19, wherein the step of treatment with said non-aqueous cleaning composition involves immersion of the object in, or spraying the object with, the non-aqueous cleaning composition.

21. A method according to claim 20, wherein the immersion or spraying process in the treatment step are accompanied by ultrasonic agitation and mechanical stirring.

22. A method according to any of claims 17-21, further comprising the step of drying the object after the step of treatment with said non-aqueous cleaning composition.

23. A method according to any of claims 17-22, further comprising the steps of:
a cleaning step of dewatering and cleaning the object to be cleaned by a cleaning vessel containing the non-aqueous dewatering cleaning composition comprising the polyorganosiloxane of formula (II), and
a step of rinsing and cleaning said object to be cleaned after the dewatering and cleaning, by a plurality of vessels (7, 8) in sequence, each of the vessels containing a rinsing cleaning agent, which comprises the polyorganosiloxane of formula (II) and which does not comprise surfactant, the vessels being connected such that said rinsing cleaning agent is transmitted in sequence in the direction opposite to that of transmitting said object to be cleaned,
wherein said rinsing step is conducted while a rinsing cleaning waste liquid is recovered from the most downstream vessel (7) of said plurality of vessels, the recovered rinsing cleaning waste liquid is distilled so as to be recycled, and the recycled rinsing cleaning agent is re-supplied to the most upstream (8) vessel of the rinsing step.

24. A method according to claim 23, wherein said rinsing cleaning waste liquid is filtered as a pre-treatment for the distillation.

25. A method according to claim 23, wherein the cleaning waste liquid of the step of rinsing and cleaning is recovered from the most downstream vessel and the recovered cleaning waste liquid is distilled to recycle said low molecular weight polyorganosiloxane of formula (II).

## Patentansprüche

1. Verwendung einer nichtwässrigen, wasserentfernenden Reinigungszusammensetzung als ein wasserentfernendes Reinigungsmittel mindestens für Metallteile, beschichtete Teile, elektronische Bauelemente, Halbleiterelemente, Kunststoffteile und Keramikteile, aufweisend mindestens ein niedermolekulares Polyorganosiloxan der Formel (II) 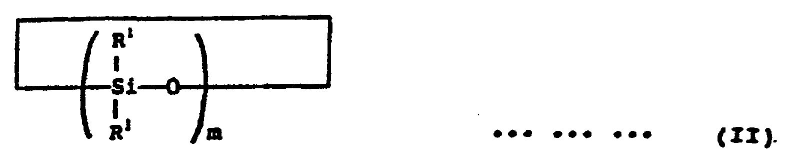 (worin R¹ eine organische Gruppe ist, mit einer einzigen Valenz substituiert durch die gleiche oder eine davon verschiedene Gruppe, oder unsubstituiert ist, und worin m eine ganze Zahl von 3 bis 7 ist).

2. Verwendung einer nichtwässrigen Reinigungszusammensetzung nach Anspruch 1, die im wesentlichen aus dem niedermolekularen Polyorganosiloxan der Formel (II) besteht.

3. Verwendung einer nichtwässrigen Reinigungszusammensetzung nach Anspruch 2, das ferner ein Tensid und/oder ein hydrophiles Lösemittel aufweist.

4. Verwendung einer nichtwässrigen Reinigungszusammensetzung nach Anspruch 3, mindestens aufweisend ein Tensid, wobei das Tensid ausgewählt ist aus Aniontensiden, nichtionischen Tensiden, Amphotensiden und Kationtensiden.

5. Verwendung einer nichtwässrigen Reinigungszusammensetzung nach Anspruch 4, worin das Tensid ein Aniontensid ist, ausgewählt ist aus Polyoxyalkylenalkylethersulfonaten und Phosphorsäureestern.

6. Verwendung einer nichtwässrigen Reinigungszusammensetzung nach Anspruch 4, worin das Tensid ein nichtionisches Tensid ist, ausgewählt aus Polyalkoholfettsäureestern, Polyoxyalkylenfettsäureestern und Polyoxyalkylenalkylethern.

7. Verwendung einer nichtwässrigen Zusammensetzung nach Anspruch 4, worin das Tensid ein Amphotensid eines Imidazolin-Derivat ist.

8. Verwendung einer nichtwässrigen Reinigungszusammensetzung nach Anspruch 4, worin das Tensid ein Kationtensid ist, ausgewählt aus Alkylamin-Salzen und Alkylquaternären Ammonium-Salzen.

9. Verwendung einer nichtwässrigen Reinigungszusammensetzung nach Anspruch 4, worin das Tensid ferner eine von Terpen-enthaltenden Verbindungen einschließt und einen höheren Fettsäureester.

10. Verwendung einer nichtwässrigen Reinigungszusammensetzung nach einem der vorgenannten Ansprüche 4 bis 9, worin die Menge des Tensids bezogen auf 100 Gewichtsteile des Polyorganosiloxans der Formel (II) 20 Gewichtsteile oder weniger beträgt.

11. Verwendung einer nichtwässrigen Reinigungszusammensetzung nach einem der vorgenannten Ansprüche 4 bis 9, worin die Menge des Tensids bezogen auf 100 Gewichtsteile des Polyorganosiloxans der Formel (II) 3 Gewichtsteile oder weniger beträgt.

12. Nichtwässrige wasserentfernende Reinigungszusammensetzung, aufweisend mindestens ein niedermolekulares Polyorganosiloxan der Formel (II)
(worin R¹ eine organische Gruppe ist, mit einer einzigen Valenz substituiert durch 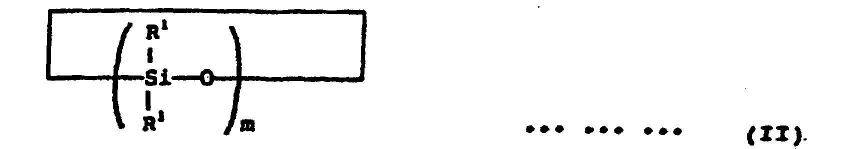 die gleiche oder eine davon verschiedene Gruppe, oder unsubstituiert ist und m eine ganze Zahl von 3 bis 7 ist), aufweitend ein hydrophiles Lösemittel, ausgewählt ist aus Polyalkoholen und deren Derivaten.

13. Nichtwässrige wasserentfernende Reinigungszusammensetzung nach Anspruch 12, worin das hydrophile Lösemittel einen Flammpunkt von 40°C oder mehr hat.

14. Nichtwässrige wasserentfernende Reinigungszusammensetzung nach Anspruch 12 oder 13, worin das hydrophile Lösemittel ausgewählt ist aus Polyalkoholen und deren Derivaten, ausgewählt aus Ethylenglykolmonomethylethern, Ethylenglykohnonoethylethern, Ethylenglykolmonopropylethern, Ethylenglykolmonobutylethern, Ethylenglykolmonobutyletheracetaten und Diethylenglykolmonobutylethern.

15. Nichtwässrige wasserentfernende Reinigungszusammensetzung nach Anspruch 12, 13 oder 14, worin die Menge des hydrophilen Lösemittels bezogen auf 100 Gewichtsteile des Polyorganosiloxans der Formel (II) 100 Gewichtsteile oder weniger beträgt.

16. Nichtwässrige wasserentfernende Reinigungszusammensetzung nach Anspruch 12 bis 15, worin die Menge des hydrophilen Lösemittels bezogen auf 100 Gewichtsteile des Polyorganosiloxans der Formel (II) 50 Gewichtsteile oder weniger beträgt

17. Verfahren zum Reinigen eines Gegenstandes, welches Verfahren das Behandeln des Gegenstandes unter Verwendung einer nichtwässrigen wasserentfernenden Reinigungszusammensetzung nach einem der Ansprüche 12 bis 16 umfasst.

18. Verfahren nach Anspruch 17, wobei der zu reinigende Gegenstand mindestens ein Material aufweist, das ausgewählt ist aus einem metallischen Material, einem Keramikmaterial und einem Kunststoffmaterial.

19. Verfahren zum Reinigen eines Gegenstandes, welches Verfahren die Verwendung einer nichtwässrigen wasserentfernenden Reinigungszusammensetzung nach einem der Ansprüche 1 bis 16 umfasst,
wobei der zu reinigende Gegenstand mindestens ein Material aufweist, das ausgewählt ist aus einem metallischen Material, einem Keramikmaterial und einem Kunststoffmaterial und das Material in Form von mindestens eines Teils vorliegt, ausgewählt ist aus einem metallischen Teil, einem oberflächenbehandelten Teil, einem elektronischen Bauelement, einem elektrischen Teil, einem Halbleiterelement, einem Präzisionsmaschinenteil, einem optischen Teil, einem Glasteil, einem Keramikteil und einem Kunststoffteil.

20. Verfahren nach einem der Ansprüche 17 bis 19, bei welchem der Schritt der Behandlung mit der nichtwässrigen Reinigungszusammensetzung das Eintauchen des Gegenstandes in oder das Besprühen des Gegenstandes mit der nichtwässrigen Reinigungszusammensetzung umfasst.

21. Verfahren nach Anspruch 20, bei welchem der Prozess des Eintauchens oder des Besprühens des Behandlungsschrittes begleitet ist von einer Bewegung mit Ultraschall und einem mechanischen Rühren.

22. Verfahren nach einem der Ansprüche 17 bis 21, ferner umfassend den Schritt des Trocknens des Gegenstandes nach dem Schritt der Behandlung mit der nichtwässrigen Reinigungszusammensetzung.

23. Verfahren nach einem der Ansprüche 17 bis 22, ferner umfassend die Schritte: Reinigungsschritt zum Reinigen und Wasserentfernen des zu reinigenden Gegenstandes in einem Reinigungsbehälter, der die nichtwässrige wasserentfernende Reinigungszusammensetzung enthält, aufweisend das Polyorganosiloxan der Formel (II); und
einen Schritt des Spülens und Reinigens des zu reinigenden Gegenstandes nach dem Wasserentfernen und Reinigen in einer Mehrzahl von Behältern (7,8) hintereinander, wobei jeder der Behälter ein Spülreinigungsmittel enthält, welches das Polyorganosiloxan der Formel (II) aufweist und welches kein Tensid aufweist, wobei der Behälter derart angeschlossen ist, dass das Spülreinigungsmittel nacheinander in entgegengesetzter Richtung zu der des Transports des zu reinigenden Gegenstandes transportiert wird;
wobei der Spülschritt ausgeführt wird, während die verbrauchte Spülreinigungsflüssigkeit von dem untersten Behälter (7) der Mehrzahl von Behältern zurückgewonnen wird; die zurückgewonnene verbrauchte Spülreinigungsflüssigkeit destilliert wird, so dass sie in den Kreislauf zurückgeführt werden kann und das in den Kreislauf zurückgeführte Spülreinigungsmittel in den obersten Behälter (8) des Spülschrittes zurückgeführt wird.

24. Verfahren nach Anspruch 23, bei welchem die verbrauchte Spülreinigungsflüssigkeit filtriert wird als Vorbehandlung vor der Distillation.

25. Verfahren nach Anspruch 23, bei welchem die verbrauchte Reinigungsflüssigkeit des Spül- und Reinigungsschrittes aus dem untersten Behälter zurückgewonnen wird und die zurückgewonnene verbrauchte Reinigungsflüssigkeit destilliert wird, um das niedermolekulare Polysiloxan der Formel (II) in den Kreislauf zurückzuführen.

## Revendications

1. Utilisation d'une composition nettoyante asséchante non aqueuse en tant qu'agent nettoyant asséchant pour au moins une pièce parmi les pièces métalliques, les pièces plaquées, les pièces électroniques, les pièces semi-conductrices, les pièces plastiques et une pièce céramique, comprenant au moins un polyorganosiloxane de bas poids moléculaire de formule (II): 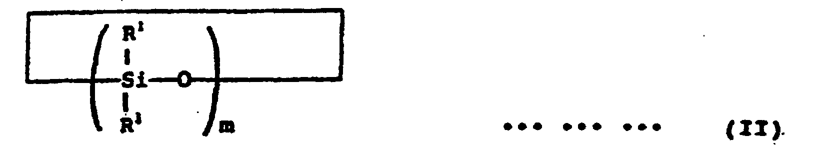 (dans laquelle R¹ est un groupe organique de valence unique substitué par le même groupe ou un groupe différent ou non substitué, et m est un entier de 3 à 7).

2. Utilisation d'une composition nettoyante non aqueuse selon la revendication 1, essentiellement constituée par ledit polyorganosiloxane de bas poids moléculaire de formule (II).

3. Utilisation d'une composition nettoyante non aqueuse selon la revendication 2, comprenant en outre un agent tensioactif et/ou un solvant hydrophile.

4. Utilisation d'une composition nettoyante non aqueuse selon la revendication 3, comprenant au moins ledit agent tensioactif, l'agent tensioactif étant choisi parmi les agents tensioactifs anioniques, les agents tensioactifs non ioniques, les agents tensioactifs amphotères et les agents tensioactifs cationiques.

5. Utilisation d'une composition nettoyante non aqueuse selon la revendication 4, dans laquelle l'agent tensioactif est un agent tensioactif anionique choisi parmi les sulfonates d'éther alkylique de polyoxyalkylène et les esters phosphoriques.

6. Utilisation d'une composition nettoyante non aqueuse selon la revendication 4, dans laquelle l'agent tensioactif est un agent tensioactif non ionique choisi parmi les esters d'acides gras et de polyalcools, les esters d'acides gras et de polyoxyalkylènes et les éthers alkyliques de polyoxyalkylène.

7. Utilisation d'une composition non aqueuse selon la revendication 4, dans laquelle l'agent tensioactif est un agent tensioactif amphotère dérivé d'imidazoline.

8. Utilisation d'une composition nettoyante non aqueuse selon la revendication 4, dans laquelle l'agent tensioactif est un agent tensioactif cationique choisi parmi les sels d'alkylamine et les sels alkyliques d'ammonium quaternaire.

9. Utilisation d'une composition nettoyante non aqueuse selon la revendication 4, dans laquelle l'agent tensioactif inclut en outre un ingrédient parmi un composé terpénique et un ester d'acide gras supérieur.

10. Utilisation d'une composition nettoyante non aqueuse selon l'une quelconque des revendications 4-9, dans laquelle la quantité de l'agent tensioactif est de 20 parties en poids ou moins pour 100 parties en poids du polyorganosiloxane de formule (II).

11. Utilisation d'une composition nettoyante non aqueuse selon l'une quelconque des revendications 4-9, dans laquelle la quantité de l'agent tensioactif est de 3 parties en poids ou moins pour 100 parties en poids du polyorganosiloxane de formule (II).

12. Composition nettoyante asséchante non aqueuse comprenant au moins un polyorganosiloxane de bas poids moléculaire de formule (II): 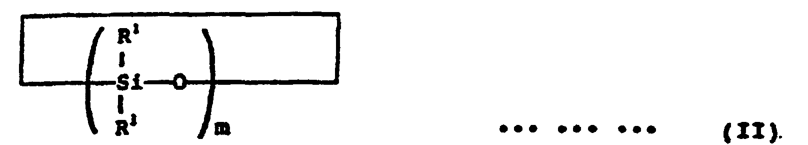 (dans laquelle R¹ est un groupe organique de valence unique substitué par le même groupe ou un groupe différent ou non substitué, et m est un entier de 3 à 7), comprenant un solvant hydrophile choisi parmi les polyalcools et leurs dérivés.

13. Composition nettoyante asséchante non aqueuse selon la revendication 12, dans laquelle ledit solvant hydrophile a un point d'éclair de 40°C ou plus.

14. Composition nettoyante asséchante non aqueuse selon la revendication 12 ou 13, dans laquelle le solvant hydrophile est choisi parmi les polyalcools et leurs dérivés choisis parmi les éthers monométhyliques d'éthylèneglycol, les éthers monoéthyliques d'éthylèneglycol, les éthers monopropyliques d'éthylèneglycol, les éthers monobutyliques d'éthylèneglycol, les acétates d'éther monobutylique d'éthylèneglycol et les éthers monobutyliques de diéthylèneglycol.

15. Composition nettoyante asséchante non aqueuse selon la revendication 12, 13 ou 14, dans laquelle la quantité du solvant hydrophile est de 100 parties en poids ou moins pour 100 parties en poids du polyorganosiloxane de formule (II).

16. Composition nettoyante asséchante non aqueuse selon l'une quelconque des revendications 12-15, dans laquelle la quantité du solvant hydrophile est de 50 parties en poids ou moins pour 100 parties en poids du polyorganosiloxane de formule (II).

17. Procédé de nettoyage d'un objet, le procédé comprenant le traitement de l'objet en utilisant une composition nettoyante non aqueuse selon l'une quelconque des revendications 12-16.

18. Procédé selon la revendication 17, dans lequel l'objet à nettoyer comprend au moins un matériau choisi parmi un matériau métallique, un matériau céramique et un matériau plastique.

19. Procédé de nettoyage d'un objet, le procédé comprenant l'utilisation d'une composition nettoyante asséchante non aqueuse selon l'une quelconque des revendications 1-16, dans lequel l'objet à nettoyer comprend au moins un matériau choisi parmi un matériau métallique, un matériau céramique et un matériau plastique, et le matériau est sous la forme d'au moins une pièce choisie parmi une pièce métallique, une pièce traitée en surface, une pièce électronique, une pièce électrique, une pièce semi-conductrice, une pièce de machine de précision, une pièce optique, une pièce en verre, une pièce céramique et une pièce en matière plastique.

20. Procédé selon l'une quelconque des revendications 17-19, dans lequel l'étape de traitement avec ladite composition nettoyante non aqueuse comprend l'immersion de l'objet dans, ou la pulvérisation de l'objet avec, la composition nettoyante non aqueuse.

21. Procédé selon la revendication 20, dans lequel le procédé d'immersion ou de pulvérisation dans l'étape de traitement est accompagné par une agitation ultrasonore et une agitation mécanique.

22. Procédé selon l'une quelconque des revendications 17-21, comprenant en outre l'étape consistant à sécher l'objet après l'étape de traitement avec ladite composition nettoyante non aqueuse.

23. Procédé selon l'une quelconque des revendications 17-22, comprenant en outre les étapes suivantes:
une étape de nettoyage consistant à assécher et nettoyer l'objet à nettoyer avec un réservoir nettoyant contenant la composition nettoyante asséchante comprenant le polyorganosiloxane de formule (II), et
une étape de rinçage et de nettoyage dudit objet à nettoyer après l'assèchement et le nettoyage, avec plusieurs réservoirs (7,8) successifs, chacun des réservoirs contenant un agent nettoyant rinçant, qui comprend le polyorganosiloxane de formule (II) et qui ne comprend pas d'agent tensioactif, les réservoirs étant raccordés de sorte que ledit agent nettoyant rinçant est transmis successivement dans la direction opposée à celle de la transmission dudit objet à nettoyer,
dans lequel ladite étape de rinçage est effectuée tout en recueillant un liquide nettoyant rinçant résiduel à partir du réservoir le plus en aval (7) desdits plusieurs réservoirs, le liquide nettoyant rinçant résiduel recueilli est distillé pour être recyclé, et l'agent nettoyant rinçant recyclé est réalimenté au réservoir le plus en amont (8) de l'étape de rinçage.

24. Procédé selon la revendication 23, dans lequel ledit liquide nettoyant rinçant résiduel est filtré en tant que prétraitement pour la distillation.

25. Procédé selon la revendication 23, dans lequel le liquide nettoyant résiduel de l'étape de rinçage et nettoyage est recueilli à partir du récipient le plus en aval et le liquide nettoyant résiduel recueilli est distillé pour recycler ledit polyorganosiloxane de bas poids moléculaire de formule (II).
